# EUROPÄISCHE PATENTSCHRIFT

(11) **EP 4 049 888 B1**
(45) Veröffentlichungstag und Bekanntmachung des Hinweises auf die Patenterteilung: **18.12.2024**
(21) Anmeldenummer: 22157234.0
(22) Anmeldetag: 17.02.2022
(51) Int. Cl.: B60L 58/26, B60H 1/00, H01M 10/663, H01M 10/625, B61C 3/02, B61D 27/00

(54) **KÜHLEINRICHTUNG FÜR EINE FAHRZEUGBATTERIE**
COOLING DEVICE FOR A CAR BATTERY
DISPOSITIF DE REFROIDISSEMENT POUR UNE BATTERIE DE VÉHICULE

(30) Priorität: 25.02.2021 DE 102021201795
(43) Veröffentlichungstag der Anmeldung: 31.08.2022
(73) Patentinhaber: Siemens Mobility GmbH, 81739 München (DE)
(72) Erfinder: Brendel, Thomas, 40822 Mettmann (DE)
(74) Vertreter: Siemens Patent Attorneys

(56) Entgegenhaltungen:
- DE-A1- 102008 057 305
- DE-A1- 102017 223 214
- DE-A1- 102019 220 400
- JP-A- 2013 220 712
- JP-A- 2014 223 891

## Beschreibung

Die Erfindung betrifft eine Kühlvorrichtung für eine Fahrzeugbatterie, insbesondere für eine Batterie, in der elektrische Energie zur Versorgung einer Traktionseinrichtung eines Schienenfahrzeugs speicherbar ist.

Fahrzeuge unterschiedlichster Art können elektrisch angetrieben werden und benötigen in vielen Fällen einen Energiespeicher, sofern sie nicht dauerhaft an eine externe elektrische Versorgung angeschlossen sind. Derartige Energiespeicher werden üblicherweise als Fahrzeugbatterie bezeichnet, wobei unter diesen Begriff auch Akkumulatoren fallen. Beispielsweise werden Schienenfahrzeuge, die ganz oder teilweise Strecken befahren, die nicht über eine Oberleitung oder eine dritte Schiene elektrifiziert sind, zunehmend mit Energiespeichern, so genannten Traktionsbatterien, ausgestattet. In diesen Traktionsbatterien gespeicherte elektrische Energie dient dabei der Versorgung von Antriebskomponenten sowie gegebenenfalls von Hilfsbetrieben des Schienenfahrzeugs während des Befahrens eines nicht elektrifizierten Streckenabschnitts. Ein Laden der Traktionsbatterien erfolgt beispielsweise während des Befahrens eines elektrifizierten Streckenabschnitts, an speziellen Ladestationen oder über eine weitere Energieeinrichtung an Bord, wie z.B. eine Brennstoffzelle.

Eine Traktionsbatterie besteht üblicherweise aus einer Vielzahl elektrisch miteinander verbundener Batteriezellen bzw. Modulen von Batteriezellen mit hoher Leistung und Energiedichte. Um eine lange Lebensdauer der Batteriezellen, welche bei Schienenfahrzeugen mit einer angestrebten Einsatzdauer von bis zu 30 Jahren von besonderer Bedeutung ist, zu erzielen, müssen die Batteriezellen innerhalb eines definierten Temperaturbands betrieben werden. Dieses Temperaturband ist u.a. von den Materialien der Batteriezellen abhängig und kann insbesondere unterhalb der Umgebungstemperatur liegen. Liegt beispielsweise die bevorzugte Batteriezelltemperatur bei 25 °C, so kann bei Umgebungstemperaturen deutlich unterhalb von 25 °C die Batterie direkt mit Umgebungsluft oder indirekt über ein Wärmeträgermedium und einen Wärmeübertrager mit Umgebungsluft gekühlt werden. Bei höheren Umgebungstemperaturen ist eine direkte oder indirekte Kühlung mit Umgebungsluft nicht ausreichend, um das Temperaturband zu erhalten. Für eine ausreichende Kühlung muss beispielsweise eine Kältemaschine nach dem Prinzip einer Kompressionskältemaschine eingesetzt werden, welche die Batteriezellen auf Temperaturen unterhalb der Umgebungstemperaturen kühlen kann.

Der Betrieb der Kältemaschine ist jedoch sehr energieintensiv. Darüber hinaus können niedrige Umgebungstemperaturen dazu führen, dass der in der Kältemaschine enthaltene Kältemittelverdichter in einem für seine Lebensdauer sehr ungünstigen Betriebsbereich betrieben werden muss.

Aus EP 1 266 779B1 ist bekannt, zusätzlich zu einer Kältemaschine eine (indirekte) Kühlung mit Umgebungsluft vorzusehen. Diese zusätzliche Kühlung erfordert einen zusätzlichen Kühler im System. Der beschriebene Fahrzeugkühlkreislauf umfasst einen Kältemittelkreislauf und einen Kühlkreislauf mit einer zu kühlenden Komponente und einem Kühler. Bei ausreichend niedriger Umgebungstemperatur kann die Kühlung der zu kühlenden Komponente, beispielsweise einer Traktionsbatterie, allein über den Kühler im Kühlkreislauf realisiert werden. Bei hohen Umgebungstemperaturen wird die Kältemaschine in Betrieb gesetzt, welche dann das Kühlmittel im Kühlkreislauf zusätzlich kühlen kann. Nachteilig ist, dass zur Kühlung ohne Betrieb der Kältemaschine ein zusätzlicher Kühler erforderlich ist, wie in der Patentanmeldung DE102008057305 A1 (Behr GmbH & CO KG) offenbart.

Auf einem Fahrzeug erhöht er dessen Herstellungskosten, das Gewicht und den Platzbedarf. Darüber hinaus muss der Kühler permanent von Luft durchströmt werden, was einen leistungsstarken Ventilator erfordert.

In der Zeitschrift Kälte Klima Aktuell, Ausgabe 04/2016 wird für eine stationäre Kühlung, z.B. von IT-Ausrüstung eine Kühleinrichtung vorgestellt, die im Wesentlichen aus einer um Zusatzkomponenten erweiterten Kältemaschine mit CO₂ als Kältemittel besteht. Bei konventionellem Betrieb der Kältemaschine ist der Kältemittelverdichter in Betrieb und das System arbeitet wie eine konventionelle Kompressionskältemaschine. Bei ausreichend niedrigen Umgebungstemperaturen kann der Kältemittelverdichter abgeschaltet werden, und stattdessen werden die Zusatzkomponenten benötigt; insbesondere wird eine Pumpe eingeschaltet und ein Ventil geöffnet. Diese Pumpe muss dabei eine relativ hohe Druckdifferenz zwischen Saug- und Druckseite erzeugen, ferner muss ein Mindestvolumenstrom sichergestellt werden.

Eine derartige Lösung ist für die speziellen Anforderungen bei einer Batteriekühlung in einem Fahrzeug jedoch nicht geeignet. Insbesondere bei der Anwendung im Schienenfahrzeugbereich liegt der erforderliche Druck des Kältemittels CO₂ typischerweise bei bis zu 150 bar. Da das Kältemittel CO₂ durch die Batterien geführt werden müsste, um dort zu verdampfen, wäre eine sehr hohe Druckfestigkeit und Dichtigkeit in dem weit verzweigten System von Batteriezellen und dazwischen liegenden Kühlkanälen notwendig. Dies wäre technisch nicht oder nur mit sehr hohem Aufwand erreichbar. Ferner sind Batterie und Batteriekühlung auf einem Fahrzeug oft an unterschiedlichen Einbauorten angeordnet, so dass auch die Verbindungsleitungen diesen hohen Anforderungen entsprechen müssten. CO₂ ist außerdem bei Anwendungen mit hohen Umgebungstemperaturen wenig effizient.

Die Erfindung hat zur Aufgabe, eine Kühleinrichtung anzugeben, die für die Kühlung einer Batterie eines Fahrzeugs, insbesondere eines Schienenfahrzeugs, geeignet ist, energieeffizient betreibbar ist und mit geringem technischen Aufwand realisiert werden kann.

Diese Aufgabe wird durch eine Kühleinrichtung gemäß Anspruch 1 gelöst sowie durch ein Verfahren mit den Merkmalen des Anspruchs 19.

Vorteilhafte Ausgestaltungen der Erfindung sind in den Unteransprüchen angegeben.

Die erfindungsgemäße Kühleinrichtung weist einen Kältemittelkreislauf und einen Kühlmittelkreislauf auf, die über einen Wärmeübertrager gekoppelt sind. Die Fahrzeugbatterie steht in Wärmekontakt mit dem Kühlkreislauf, wird also durch diesen gekühlt. Der Kältemittelkreislauf umfasst einen Verflüssiger, eine dazu stromabwärts angeordnete Kältemittelpumpe, ein Expansionsventil, das weiter stromabwärts oder parallel zur Kältemittelpumpe angeordnet ist, einen noch weiter stromabwärts angeordneten Verdampfer, der als Wärmeübertrager mit dem Kühlmittelkreislauf ausgebildet ist, und einen noch weiter stromabwärts angeordneten Verdichter. Der Kältemittelkreislauf weist ferner einen Sensor auf, mithilfe dessen der Kältemittelstrom gesteuert wird. Es ist ein Bypass zur Kältemittelpumpe vorgesehen. Ferner ist ein Bypass zum Verdichter vorgesehen. Die Lösung mit in Reihe geschaltetem Expansionsventil und Kältemittelpumpe wird im Folgenden als erste Variante bezeichnet, die Lösung mit parallel geschaltetem Expansionsventil und Kältemittelpumpe als zweite Variante.

Mit der erfindungsgemäßen Kühleinrichtung kann eine Fahrzeugbatterie effizient gekühlt werden, wobei der Verdichter bei niedrigen Umgebungstemperaturen nicht betrieben werden muss.

Bei hohen Umgebungstemperaturen arbeitet die Kühleinrichtung wie eine konventionelle Kompressionskältemaschine, bei der der Verdichter in Betrieb ist. Der Verdichter fördert das gasförmige Kältemittel zum Verflüssiger unter Erhöhung von Druck und Temperatur des Kältemittels.

Im Verflüssiger kondensiert das Kältemittel. Das flüssige Kältemittel wird über den Bypass der Kältemittelpumpe und das Expansionsventil zum Verdampfer geführt, in welchem es verdampft und dadurch das Kühlmittel im Kühlmittelkreislauf kühlt. Dabei ist das Expansionsventil so eingestellt, dass das Kältemittel vollständig im Verdampfer verdampft und eventuell (je nach Kältemittel und Verdichtertyp) eine geringe Übererhitzung vorliegt. Mit dem derart gekühlten Kühlmittel unter Einsatz einer Kühlmittelpumpe wird die Fahrzeugbatterie gekühlt.

Bei niedrigen Umgebungstemperaturen kann der Verdichter abgeschaltet werden. Die Kältemittelpumpe wird eingeschaltet und der Bypass zur Kältemittelpumpe ist geschlossen. Die Kältemittelpumpe fördert nun das flüssige Kältemittel - bei einer Lösung nach der 1. Variante auch über das Expansionsventil - zum Verdampfer und kühlt dort das mit der Kühlmittelpumpe umgewälzte Kühlmittel. Das gasförmige Kältemittel wird vom Ausgang des Verdampfers über den Bypass des Verdichters zum Verflüssiger geführt. Dort kondensiert es aufgrund der niedrigen Temperatur der Umgebungsluft auch ohne die Druckerhöhung, welche in der konventionellen Betriebsweise durch den Verdichter erzeugt wird.

Der Kältemittelstrom durch die Kältemittelpumpe ist mithilfe eines Sensors steuerbar, indem ein Ventil im Kältemittelstrom und/oder die Kältemittelpumpe gesteuert wird.

Soll die maximal mögliche Kühlleistung erreicht werden, erfolgt die Steuerung mithilfe des Sensors derart, dass am Austritt aus dem Verdampfer das Kältemittel vollständig verdampft aber vorzugsweise noch nicht überhitzt ist, oder derart, dass in jeder Betriebssituation ausreichend Flüssigkeit vorliegt, so dass kein gasförmiges Kältemittel zur Pumpe gelangt.

Beispiele für die Sicherstellung des vollständigen Verdampfens:
In einer Ausführungsform wird ein Sensor verwendet, der auch für eine Steuerung des Expansionsventils eingesetzt wird. Vorteilhafterweise wird dadurch kein zusätzlicher Sensor für die Steuerung des Kältemittelstroms benötigt. Derartige Sensoren messen Druck und Temperatur und weisen entsprechende Sensorkomponenten auf, wobei es auch möglich ist, dass eine Sensorkomponente am Eingang des Verdampfers angeordnet ist.
Mithilfe der Sensor-Messwerte wird das Expansionsventil entsprechend eingestellt und dadurch der Kältemittelstrom gesteuert, vorzugsweise wird ein elektronisches Expansionsventil verwendet. Es kann aber auch ein weiteres steuerbares Ventil vorgesehen sein, das stromaufwärts oder stromabwärts zur Kältemittelpumpe angeordnet ist.
Mithilfe der Sensor-Messwerte kann aber auch die Kältemittelpumpe, d.h. ihre Förderleistung, gesteuert oder geregelt werden.

Beispiele für die Sicherstellung von ausreichendem flüssigen Kältemittel am Eingang der Kältemittelpumpe:
In einer Ausführungsform kann für die Steuerung ein Füllstandssensor stromaufwärts zur Kältemittelpumpe, vorzugsweise an einem Sammler, verwendet werden.
Mithilfe der Sensor-Messwerte kann die Kältemittelpumpe entsprechend eingestellt werden, hierdurch wird der Kältemittelstrom gesteuert oder geregelt. Am Austritt aus dem Verdampfer kann dann noch flüssiges Kältemittel vorliegen. Dies ist jedoch unschädlich, da der Kältemittelverdichter nicht in Betrieb ist und somit nicht durch das flüssige Kältemittel geschädigt werden kann. Andererseits kann durch die Überflutung des Verdampfers die Kälteleistung gesteigert werden.
In einer Ausführungsform wird mithilfe der Sensor-Messwerte ein steuerbares Ventil eingestellt, das stromaufwärts oder stromabwärts zur Kältemittelpumpe angeordnet ist.

Gemäß einer Ausführungsform kann die Steuerung oder Regelung auch so erfolgen, dass am Austritt aus dem Verdampfer eine geringe Überhitzung (z.B. +7 Kelvin) vorliegt.

Bei Teillastbetrieb kann die Förderleistung der Pumpe oder das steuerbare Ventil weiter gedrosselt werden, so dass das Kältemittel im Verdampfer überhitzt und entsprechend weniger Kühlleistung bereitgestellt wird. Um die Pumpe entsprechend zu steuern, kann z.B. eine Drehzahlregelung eingesetzt werden, aber auch eine aktive Drosselung oder eine aktive Rückführung.

In allen Fällen kann für die Steuerung von Ventilen oder der Kältemittelpumpe eine Verarbeitungseinheit zwischen dem Sensor und dem Ventil bzw. der Pumpe vorgesehen sein, die aus den Sensor-Messwerten entsprechende Steuerbefehle generiert. Es kann auch eine Regelung vorgesehen sein, wozu die Verarbeitungseinheit entsprechend ausgebildet ist.

Bei typischen Anwendungen bei Traktionsbatterien für Schienenfahrzeuge, R134a als Kältemittel und Wasser bzw. ein Wasser-Glykol-Gemisch als Kühlmittel ist unter niedrigen Umgebungstemperaturen insbesondere eine Temperatur unterhalb von 15°C und bevorzugt unterhalb von 10°C zu verstehen. Bei anderweitigen Anwendungsfällen können die Temperaturbereiche höher oder niedriger liegen.

Vorzugsweise ist mindestens ein Ventilator vorgesehen, der Umgebungsluft zum Verflüssiger fördert und so die Verflüssigung unterstützt.

Gemäß einer weiteren Ausführungsformen wird der Bypass der Kältemittelpumpe als Kältemittelleitung mit einem ersten Ventil, insbesondere Absperrventil, ausgeführt. Es kann aber auch eine Kältemittelpumpe zum Einsatz kommen, die auch im Stillstand für das Kältemittel durchlässig ist (d.h. die Kältemittelleitung kann entfallen), dies wird im Folgenden als "integrierter Bypass" bezeichnet. Dabei fällt unter diesen Begriff auch eine Lösung, bei der der Weg durch die Pumpe für das Kältemittel derselbe ist wie bei der in Betrieb befindlichen Pumpe.

Die Kältemittelpumpe ist vorzugsweise so dimensioniert, dass auch bei kleinen Kühlleistungen und entsprechend starker Drosselung des Kältemittel-Volumenstroms durch das Expansionsventil der Mindestvolumenstrom der Pumpe nicht unterschritten wird. Auf eine Teilrückführung des flüssigen Kältemittels über eine Drossel wie im Stand der Technik kann verzichtet werden. Alternativ oder zusätzlich kann auch eine Kältemittelpumpe mit Drehzahlregelung verwendet werden.

Der Bypass zum Verdichter kann als eine Kältemittelleitung mit einem zweiten Ventil ausgeführt sein. Es kann aber auch ein Verdichter verwendet werden, der auch im Stillstand für das Kältemittel durchlässig ist (d.h. die Kältemittelleitung kann entfallen), dies wird im Folgenden als "integrierter Bypass" bezeichnet. Dabei fällt unter diesen Begriff auch eine Lösung, bei der der Weg durch den Verdichter für das Kältemittel derselbe ist wie bei dem in Betrieb befindlichen Verdichter.

Bei Lösungen nach der zweiten Variante ist es vorteilhaft, ein Ventil vor oder nach der Kältemittelpumpe vorzusehen, wenn diese bei Stillstand für das Kältemittel durchlässig ist und als Bypass eine parallele Kältemittelleitung genutzt werden soll. Wenn die Pumpe im Stillstand für das Kältemittel undurchlässig ist, kann dieses Ventil entfallen. Wenn das Ventil als steuerbares Reduzierventil ausgebildet ist, kann es für die erfindungsgemäße Steuerung oder Regelung des Kältemittelstroms eingesetzt werden.

Es ist vorteilhaft, in dem Kältemittelkreislauf einen Sammler für das kondensierte Kältemittel vorzusehen, und insbesondere einen Sammler mit einem Füllstandssensor, wenn das zusätzliche Gewicht akzeptabel ist. Dadurch kann der Prozess besser optimiert werden.

Bei einer weiteren Ausführungsform ist in dem Kältemittelkreis ein innerer Wärmeübertrager vorgesehen. Dieser koppelt zwei Abschnitte des Kältemittelkreises miteinander, und zwar einen ersten Abschnitt nach dem Verflüssiger mit einem zweiten Abschnitt vor dem Verdichter, wodurch das flüssige Kältemittel gekühlt und das gasförmige Kältemittel erwärmt wird.

Gemäß weiteren Ausführungsformen können mehrere Kältekreise vorgesehen sein. Diese können verschachtelt sein, d.h. die Verflüssiger sind luftseitig in Reihe angeordnet, so dass die Kühlluft die Verflüssiger nacheinander durchsetzt, und die Verdampfer sind in umgekehrter Reihenfolge kühlmittelseitig in Reihe angeordnet.

Andere Ausführungsformen sehen vor, mehrere Kältekreise parallel anzuordnen. Dabei wird nur ein Verflüssiger genutzt, welcher von einem Kühlluftstrom und von mehreren stofflich voneinander getrennten Kältemittelströmen der einzelnen Kältekreise durchströmt wird. Die vielen Kanäle, auf die die Kältemittelströme der jeweiligen Kältekreise aufgeteilt sind, werden dabei vorzugsweise gleichmäßig über das Volumen des Verflüssigers verteilt. Dies hat den Vorteil, dass für jeden einzelnen Kältekreis die volle Wärmeübertragerfläche auf der Luftseite bereitgestellt wird und sich somit bei Abschaltung eines oder mehrerer Kältekreise die Effizienz der im Betrieb verbleibenden Kältekreise erhöht.

Der Kühlmittelkreis kann mehrere zu kühlende Fahrzeugbatterien aufweisen, die in Reihe und/oder parallel geschaltet sind.

Je nach räumlichen Gegebenheiten kann die Kältemittelpumpe entfallen, wenn der notwendige Druck auf andere Weise erzeugt werden kann. Beispielsweise bei einem Schienenfahrzeug können Verflüssiger, Verdichter und Verdichter-Bypass - sowie ggf.

Ventilator und Sammler - erhöht, beispielsweise auf dem Dach des Schienenfahrzeugs angeordnet werden. Verdampfer und Expansionsventil sowie ggf. das dritte Ventil können tiefer, beispielsweise direkt auf oder unter dem Wagenkastenboden angeordnet sein. Auch die Kühlmittelpumpe und die zu kühlende Fahrzeugbatterie werden dann bevorzugt auf oder unter dem Wagenkastenboden untergebracht. Auf die Kältemittelpumpe und ggf. das erste Ventil im Kältemittelpumpen-Bypass kann verzichtet werden.

Als Kältemittel können gängige Kältemittel verwendet werden, insbesondere natürliche oder synthetische Kältemittel, welche für die Normalkühlung (Kältebereitstellungstemperaturen über 0 °C) auf Fahrzeugen geeignet sind. Beispielsweise können die bei Schienenfahrzeugen üblichen Kältemittel R134a, 407c oder als umweltfreundlichere Variante R290 verwendet werden.

Die genannten Modifikationen sind untereinander kombinierbar und insbesondere grundsätzlich bei beiden Varianten anwendbar. Je nach Einsatzbedingungen (Fahrzeugtyp mit vorgegebenem Bauraum, Umgebungstemperatur, Kältemittel, Batterietyp etc.) kann eine optimale Ausführungsform gefunden werden.

### Vorteile:

Die erfindungsgemäße Kühlvorrichtung ermöglicht mit nur geringem apparativen Aufwand eine energieeffiziente Kühlung einer Fahrzeugbatterie, insbesondere bei Schienenfahrzeugen. Es wird lediglich eine kleine Kältemittelpumpe eingesetzt, wobei in den üblichen Anwendungen eine Antriebsleistung von weniger als 1W pro 1000W Kühlleistung ausreichend ist.

Durch die Steuerung des durch die Kältemittelpumpe fließenden Kältemittelstroms ist bei beiden Varianten eine optimale Ausnutzung von Verdampfer und Verflüssiger auch bei variierenden Umgebungsbedingungen möglich. Dies erhöht die Kühlleistung. Darüber hinaus kann die Kühlleistung bei Teillastbedarf über die Förderleistung der Pumpe reduziert werden. Die Kältemittelpumpe hat nur einen geringen Platzbedarf und im Verhältnis zu den anderen Bauteilen ein geringes Gewicht.

Auch die Kühlmittelpumpe ist klein und lässt sich wie die Kältemittelpumpe in bestehende Freiräume der Kühleinrichtung integrieren, so dass ein zusätzlicher Bauraum nicht erforderlich ist. Ein zusätzlicher Kühler im Kühlmittelkreislauf ist nicht erforderlich.

Durch die Verwendung des vom Kältemittelkreis getrennten Kühlkreises kann der Kühlmittelkreis an sehr viele Randbedingungen, insbesondere räumliche Gegebenheiten oder Zahl der Fahrzeugbatterien, angepasst werden.

Ein weiterer Vorteil ist, dass es generell keine Beschränkung auf ein bestimmtes Kältemittel gibt. Die Erfindung kann mit den aus der Kühlung auf Fahrzeugen und insbesondere bei Schienenfahrzeugen bekannten Kältemitteln angewendet werden.

Die Erfindung wird im Folgenden anhand von Ausführungsbeispielen näher erläutert.

Es zeigen:
Fig.1 der erfindungsgemäßen Kühleinrichtung nach der ersten Variante
Fig.2 der erfindungsgemäßen Kühleinrichtung nach der zweiten Variante
Fig. 3 - 9 weitere Ausführungsformen der Erfindung

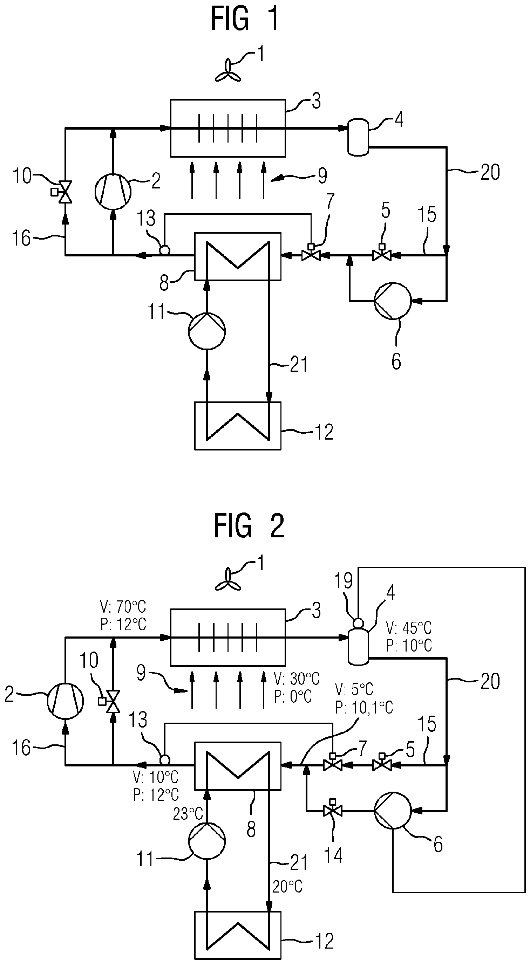

Bei dem in Figur 1 dargestellten Ausführungsbeispiel nach der ersten Variante weist die Kühleinrichtung einen Kältemittelkreislauf 20 und einen Kühlmittelkreislauf 21 auf, die über einen Wärmeübertrager 8 gekoppelt sind. Der Kältemittelkreislauf 20 umfasst einen Verflüssiger 3 und einen dazu stromabwärts angeordneten, optionalen Sammler 4. Der Kältemittelkreis weist ferner in Stromrichtung gesehen eine Kältemittelpumpe 6 mit einem Bypass auf, der als parallel zur Pumpe 6 verlaufende Kältemittelleitung 15 mit einem ersten Ventil 5 , vorzugsweise ein Absperrventil, ausgebildet ist; Kältemittelleitung 15 und erstes Ventil 5 können entfallen, wenn die Kältemittelpumpe auch im Stillstand für das Kältemittel durchlässig ist (integrierter Bypass). Nachfolgend zur Kältemittelpumpe 6 ist ein Expansionsventil 7 angeordnet, das mit einem Sensor 13 in Verbindung steht und durch diesen gesteuert wird; hierzu kann auch eine in der Figur nicht dargestellte Verarbeitungseinheit vorhanden sein.

Zwischen Expansionsventil 7 und Sensor 13 ist ein Verdampfer 8 angeordnet, der als Wärmeübertrager mit dem Kühlmittelkreis 21 arbeitet. Stromabwärts zum Verdampfer 8 sind ein Verdichter 2 und ein Bypass zum Verdichter angeordnet, der als parallel zum Verdichte 2 verlaufende Kältemittelleitung 16 mit einem zweiten Ventil 10, insbesondere Absperrventil ausgebildet ist. Mithilfe des Sensors 13 und des Expansionsventils 7 wird der Kältemittelstrom bei hohen und bei niedrigen Umgebungstemperaturen gesteuert.

Der Kühlmittelkreislauf 21 weist eine Kühlmittelpumpe 11 auf und verläuft durch eine Fahrzeugbatterie 12, so dass er diese kühlen kann.

Bei hohen Umgebungstemperaturen ist der Verdichter 2 in Betrieb und das System arbeitet wie eine konventionelle Kompressionskältemaschine. Der Verdichter 2 fördert das gasförmige Kältemittel zum Verflüssiger 3 und erhöht den Druck und die Temperatur des Kältemittels. Der Verflüssiger 3 wird mit dem von einem Ventilator 1 geförderten Umgebungsluftstrom 9 gekühlt und kondensiert somit das Kältemittel. Das kondensierte Kältemittel strömt in den Sammler 4, von wo aus es über das geöffnete erste Ventil 5 zum Expansionsventil 7 geführt wird. Gesteuert durch den Sensor 13 wird das Expansionsventil 7 (d.h. der Kältemitteldurchfluss) vorzugsweise derart eingestellt, dass das Kältemittel am Eintritt in den Verdichter 2 nur noch gasförmig vorliegt. Im Verdampfer 8 verdampft das Kältemittel und kühlt dadurch das flüssige Kühlmittel, welches über die Kühlmittelpumpe 11 von der Batterie 12 zum Verdampfer 8 geführt wird.

Bei niedrigen Umgebungstemperaturen wird der Verdichter 2 abgeschaltet, und stattdessen wird die Kältemittelpumpe 6 eingeschaltet, das zweite Ventil 10 in der Verdichter-Bypassleitung 16 geöffnet und das erste Ventil 5 in der Kältemittelpumpen-Bypassleitung 15 geschlossen. Die Pumpe 6 fördert nun das flüssige Kältemittel über das Expansionsventil 7 zum Verdampfer 8 und kühlt dort das mit der Kühlmittelpumpe 11 umgewälzte Kühlmittel. Vorzugsweise ist die Kältemittelpumpe 6 so dimensioniert, dass auch bei kleinen Kühlleistungen und entsprechend starker Drosselung des Kältemittel-Volumenstroms durch das Expansionsventil 7 der Mindestvolumenstrom der Pumpe nicht unterschritten wird. Dadurch kann vorteilhafterweise auf eine Teilrückführung des flüssigen Kältemittels über eine Drossel (bzw. eine entsprechende Ausstattung des ersten Ventils 5) verzichtet werden. Um dies zu gewährleisten, kann auch eine Drehzahlregelung der Kältemittelpumpe eingesetzt werden. Über das offene zweite Ventil 10 strömt das gasförmige Kältemittel in den Verflüssiger 3. Dort kondensiert es aufgrund der niedrigen Temperatur der Umgebungsluft 9 auch ohne eine Druckerhöhung.

Soll die maximal mögliche Kühlleistung erreicht werden, wird mithilfe des Sensors 13 das Expansionsventil derart geregelt, dass am Austritt aus dem Verdampfer 8 das Kältemittel vollständig verdampft aber vorzugsweise noch nicht überhitzt ist. Alternativ ist möglich, mithilfe eines (nicht dargestellten) Füllstandssensors am Sammler 4 die Förderleistung der Pumpe 6 vorzugsweise mithilfe einer Drehzahlregelung zu steuern und so sicherzustellen, dass in jeder Betriebssituation ausreichend Flüssigkeit vorliegt, damit kein gasförmiges Kältemittel zur Kältemittelpumpe 6 gelangt. Bei Stillstand des Verdichters 2 ist eventuell vorhandenes flüssiges Kältemittel am Verdichter-Eingang unschädlich. Für Teillastbetrieb wird das Expansionsventil bzw. alternativ die Förderleistung der Kältemittelpumpe weiter gedrosselt.

Figur 2 zeigt eine Ausführungsform der zweiten Variante, bei dem die Anordnung des Expansionsventils 7 verschieden von der ersten Variante ist. Das Expansionsventil 7 ist in der Bypassleitung 15 der Kältemittelpumpe 6, also parallel zur Kältemittelpumpe, angeordnet. Die grundsätzliche Betriebsweise bei hohen bzw. niedrigen Umgebungstemperaturen entspricht der in Zusammenhang mit Figur 1 erläuterten. Ein drittes Ventil 14 ist in Reihe zur Kältemittelpumpe geschaltet, mit ihm kann bei hohen Umgebungstemperaturen der Kältemittelstrom durch die außer Betrieb befindliche Pumpe 6 unterbunden werden. Da im Pumpenbetrieb das Expansionsventil 7 umgangen wird, kann dieses herkömmlich, z.B. als sogenanntes Thermostatisches Expansionsventil ausgeführt sein und muss nicht dazu geeignet sein, auch im Pumpenbetrieb ausreichend geöffnet zu sein. Bei Annahme üblicher Druckverluste durch Verdampfer, Verflüssiger und Rohrleitungen einer Kältemaschine reicht eine Antriebsleistung der Kältemittelpumpe von unter 1 W pro 1000 W Kühlleistung. Die Kältemittelpumpe 6 ist entsprechend klein und erhöht das Gewicht der Kühleinrichtung nur unwesentlich.

Die Steuerung des Kältemittelstroms erfolgt durch einen Sensor 19 am Sammler, mithilfe dessen die Kältemittelpumpe 6 gesteuert wird.

Nur zur besseren Veranschaulichung sind in Figur 2 Beispiele für Temperaturwerte des Kältemittels bzw. des Kühlmittels an verschiedenen Stellen des jeweiligen Kreislaufs angegeben, und zwar für den sogenannten Verdichterbetrieb bei hohen Umgebungstemperaturen (gekennzeichnet mit V) und für den sogenannten Pumpenbetrieb bei niedrigen Umgebungstemperaturen (gekennzeichnet mit P) bei Verwendung von Propan als Kältemittel und Wasser als Kühlmittel. Im gegebenen Beispiel besitzt bei niedrigen Umgebungstemperaturen von 0°C das Kältemittel nach dem Verflüssiger 3 eine Temperatur von 10°C und kann im Verdampfer das Kühlmittel auf 20°C kühlen. Damit kann die optimale Betriebstemperatur der Fahrzeugbatterie 12 gewährleistet werden. Je nach Dimensionierung der Kühleinrichtung und Ausführung ihrer einzelnen Komponenten können in einer erfindungsgemäßen Anlage andere Werte vorliegen.

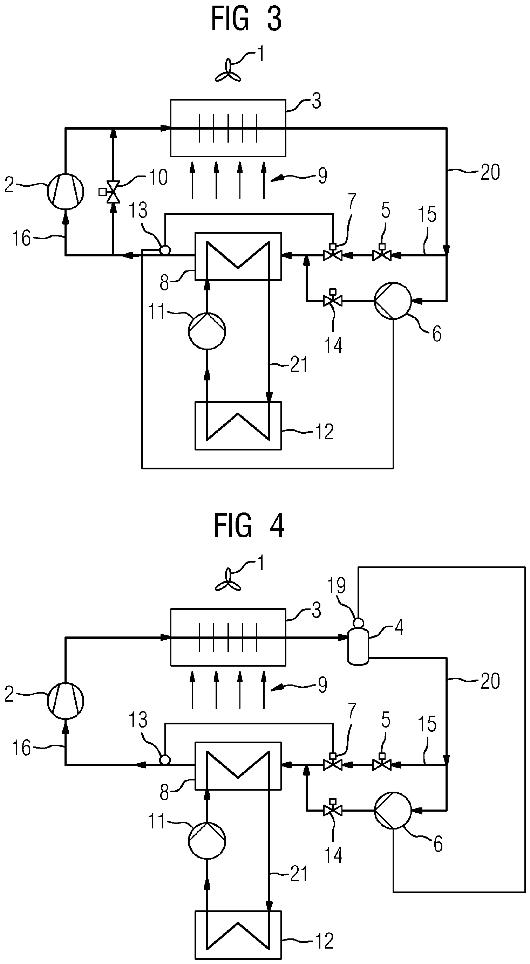

Figur 3 zeigt eine Ausführungsform, bei der auf den Sammler 4 verzichtet wird. Dadurch ist der Aufbau einfacher und noch platzsparender. Die Steuerung des Kältemittelstroms erfolgt mithilfe des Sensors 13, mithilfe dessen die Kältemittelpumpe 6 gesteuert oder geregelt wird.

Figur 4 zeigt eine Ausführungsform, bei der der Verdichter 2 einen integrierten Bypass aufweist. Bei niedrigen Umgebungstemperaturen wird das Kältemittel durch den Verdichter 2 geführt, ohne dass dieser in Betrieb ist. Eine zusätzliche Kältemittelleitung 16 und das zweite Ventil 10 können daher entfallen. Die Steuerung oder Regelung des Kältemittelstroms erfolgt wie in Figur 2 mithilfe eines Füllstandssensors 19.

Gemäß einer anderen Ausführungsform wird eine Kältemittelpumpe verwendet, die im Stillstand für das Kältemittel undurchlässig ist, so dass das dritte Ventil 14 entfallen kann.

Gemäß einer weiteren Ausführungsform wird ein Expansionsventil verwendet, dass zusätzlich die Funktion des ersten Ventils 5 übernehmen kann, beispielsweise ein elektronisches Expansionsventil. Dann kann das erste Ventil 5 entfallen.

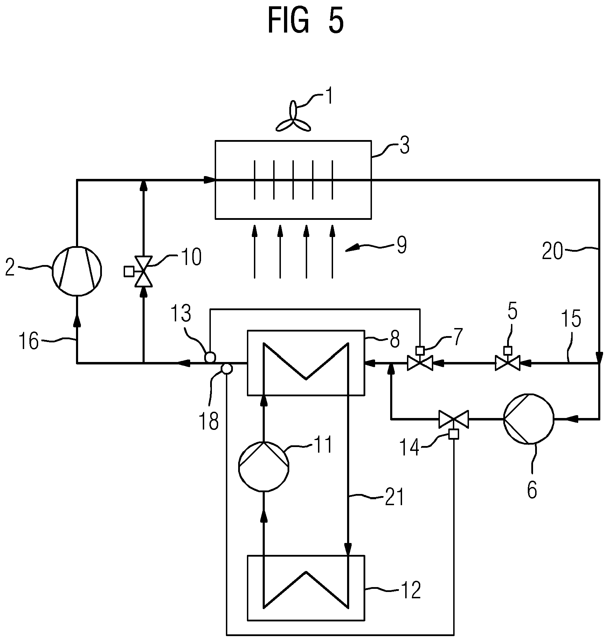

Figur 5 zeigt eine Ausführungsform, bei der auf den Sammler 4 verzichtet wird. Die Steuerung des Kältemittelstroms erfolgt mithilfe eines Sensors 18, der am Ausgang des Verdampfers angeordnet ist und in ähnlicher Weise wie der Sensor 13 des Expansionsventils Druck und Temperatur des Kältemittels misst. Anhand der Messwerte wird das dritte Ventil 14 gesteuert oder geregelt.

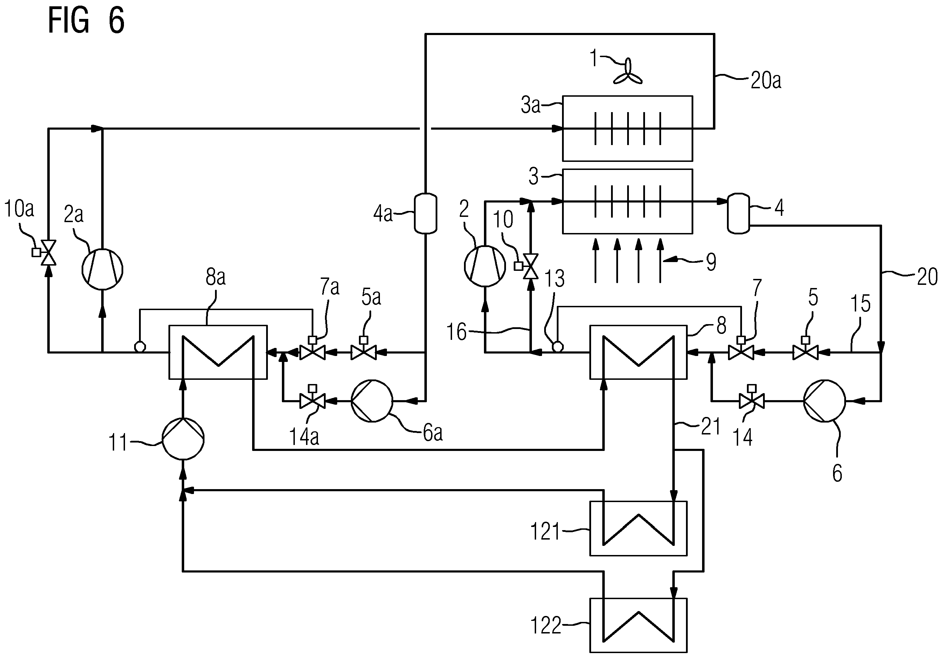

Figur 6 zeigt eine Ausführungsform, bei der zwei Kältekreise 20, 20a verschachtelt sind und außerdem zwei Fahrzeugbatterien 121, 122 im Kühlmittelkreis gekühlt werden. Die Verflüssiger 3, 3a sind luftseitig in Reihe angeordnet und die Verdampfer 8, 8a sind in umgekehrter Reihenfolge kühlmittelseitig in Reihe angeordnet. Der zweite Kältemittelkreis 20a kann gleichartig zum ersten Kältemittelkreis aufgebaut sein. Die Fahrzeugbatterien 121, 122 können wie hier gezeigt parallel angeordnet sein. Durch die gegenläufige Reihenschaltung der Verdampfer und Verflüssiger arbeiten die Kältemittelkreise auf unterschiedlichen Temperaturniveaus (im dargestellten Fall der linke auf einem etwas höheren als der rechte). Es entsteht eine Kaskadenschaltung, die zu höherer Leistung bzw. Effizienz führt.

Die Steuerung des Kältemittelstroms erfolgt in beiden Kältemittelkreisen, sie ist der Übersichtlichkeit halber hier und in den folgenden Figuren nicht dargestellt.

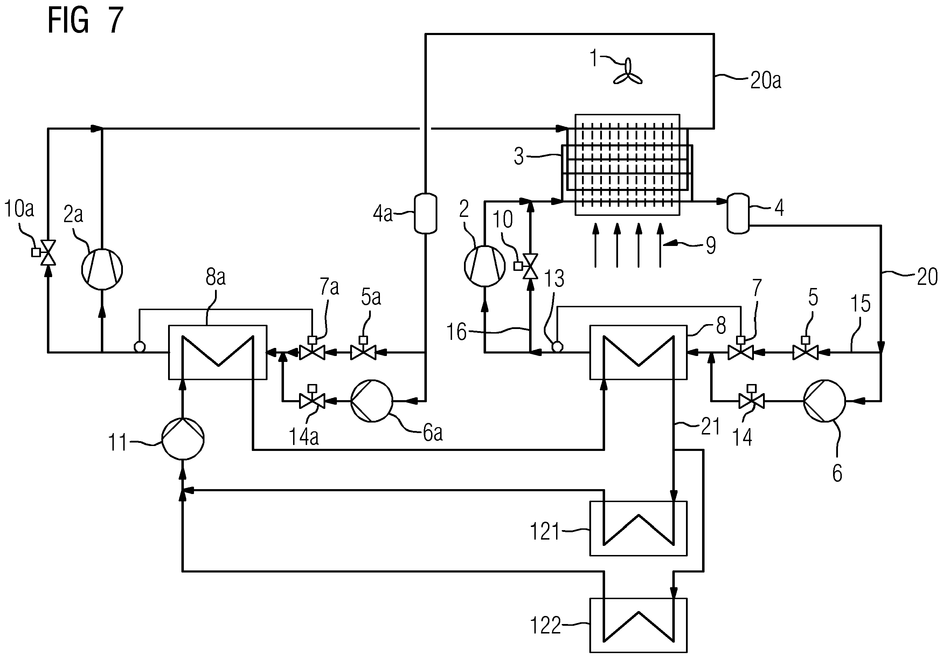

Figur 7 zeigt eine Ausführungsform, bei der zwei Kältekreise 20, 20a parallel angeordnet sind und die einen Verflüssiger 3 mit verschachtelter Kältemittelführung aufweist. Der Verflüssiger 3 mit verschachtelter Kältemittelführung stellt bei Betrieb nur eines Kältekreises die volle Wärmeübertragerfläche auf der Luftseite bereit. Diese kann ebenso wie die in Zusammenhang mit den Figuren 1 - 5 erläuterten Ausführungsformen mit einem Kühlkreis mit mehreren Fahrzeugbatterien 121, 122 versehen werden, wobei die Fahrzeugbatterien parallel und/oder in Reihe geschaltet sein können.

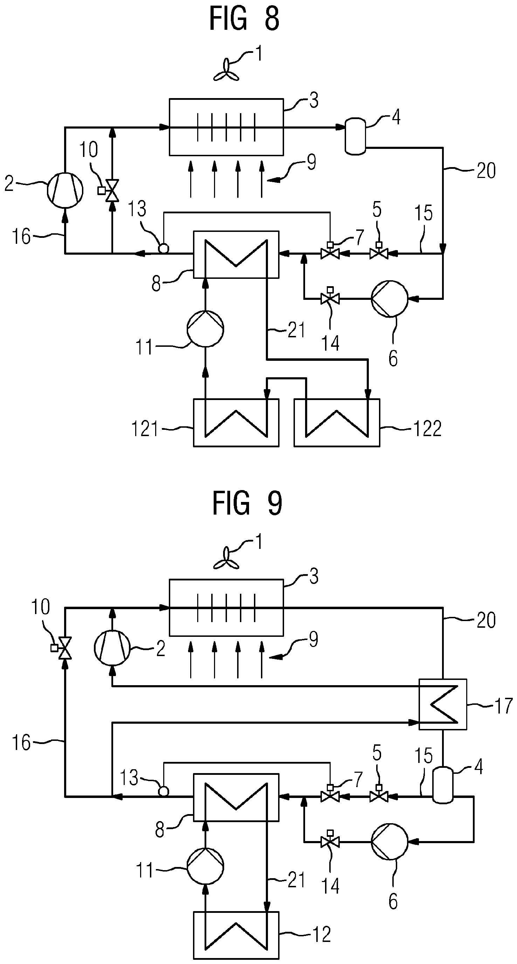

Figur 8 zeigt eine Ausführungsform mit einem Kältekreis 20 der zweiten Variante und einem Kühlkreis mit zwei in Reihe geschalteten Fahrzeugbatterien 121, 122. Dies ist eine einfache und vorteilhafte Ausführung, wenn die Fahrzeugbatterien voneinander verschiedene optimale Betriebstemperaturen besitzen.

Figur 9 zeigt eine Ausführungsform mit einem inneren Wärmeübertrager 17, der zwei Abschnitte des Kältemittelkreises miteinander koppelt. Dadurch wird das flüssige Kältemittel gekühlt und das gasförmige Kältemittel vor dem Verdichter erwärmt.

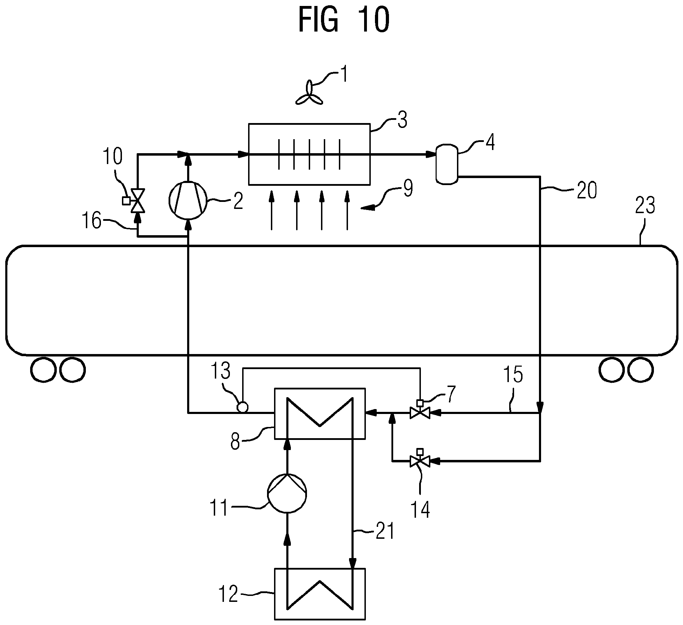

Figur 10 zeigt eine Ausführungsform, bei der der Verflüssiger 3, der Verdichter 2 und die ggf. vorhandenen Komponenten Verdichter-Bypassleitung 16, Ventilator 1 und Sammler 4 auf dem Dach eines Schienenfahrzeugs 23 angeordnet werden. Verdampfer 8 und Expansionsventil 7 sowie das zum Expansionsventil parallele dritte Ventil 14 können unter dem Wagenkastenboden angeordnet sein. Auch die Kühlmittelpumpe 11 und die zu kühlende Fahrzeugbatterie 12 werden dann unter dem Wagenkastenboden untergebracht. Aufgrund der Höhendifferenz baut sich der notwendige Druck zur Umwälzung des Kältemittels auf, so dass die Kältemittelpumpe 6 und das erste Ventil 5 entfallen können.

## Patentansprüche

1. Kühleinrichtung für eine Fahrzeugbatterie,
- mit einem Kühlmittelkreislauf (21), der eine Kühlmittelpumpe (11) umfasst und in Wärmekontakt mit der Fahrzeugbatterie (12) ist,
- mit einem Kältemittelkreislauf (20), der aufweist:
- einen Verflüssiger (3),
- eine Kältemittelpumpe (6), die stromabwärts zum Verflüssiger (3) angeordnet ist,
- einen Sensor (13, 18, 19) zur Steuerung des Kältemittelstroms,
- ein Expansionsventil (7), das stromabwärts oder parallel zur Kältemittelpumpe (6) angeordnet ist,
- einen Verdampfer (8), der stromabwärts zum Expansionsventil (7) und zur Kältemittelpumpe (6) angeordnet ist,
- einen Verdichter (2), der stromabwärts zum Verdampfer (8) angeordnet ist,
- einen Bypass (15) zur Kältemittelpumpe (6),
- einen Bypass (16) zum Verdichter (2),
wobei der Kühlmittelkreislauf (21) und der Kältemittelkreislauf (20) über den Verdampfer (8) als Wärmeübertrager gekoppelt sind.

2. Kühleinrichtung nach Anspruch 1,
**dadurch gekennzeichnet, dass**
der Sensor durch einen Füllstandssensor (19) für das Kältemittel stromaufwärts zur Kältemittelpumpe (6) gebildet wird.

3. Kühleinrichtung nach einem der vorherigen Ansprüche,
**dadurch gekennzeichnet, dass**
der Sensor durch einen Sensor (18) am Ausgang des Verdampfers (8) gebildet wird.

4. Kühleinrichtung nach Anspruch 3,
**dadurch gekennzeichnet, dass**
der Sensor durch einen Sensor (13) zur Steuerung des Expansionsventils (7) gebildet wird.

5. Kühleinrichtung nach einem der vorherigen Ansprüche,
**dadurch gekennzeichnet, dass**
der Sensor ausgebildet ist, die Kältemittelpumpe (6) oder ein mit der Kältemittelpumpe in Reihe geschaltetes Ventil (13, 14) zu steuern.

6. Kühleinrichtung nach einem der vorherigen Ansprüche,
**dadurch gekennzeichnet, dass**
der Bypass (15) zur Kältemittelpumpe (6) und/oder der Bypass (16) zum Verdichter (2) als eine Kältemittelleitung mit Absperrventil (5, 10) ausgeführt ist.

7. Kühleinrichtung nach einem der vorherigen Ansprüche,
**dadurch gekennzeichnet, dass**
die Kältemittelpumpe (6) und/oder der Verdichter (2) einen integrierten Bypass aufweist.

8. Kühleinrichtung nach einem der vorherigen Ansprüche,
**dadurch gekennzeichnet, dass**
die Kältemittelpumpe (6) eine Drehzahlregelung und/oder eine aktive Drosselung und/oder eine aktive Rückführung aufweist.

9. Kühleinrichtung nach einem der vorherigen Ansprüche,
**dadurch gekennzeichnet, dass**
zwischen Verflüssiger (3) und Kältemittelpumpe (6) ein Sammler (4) angeordnet ist.

10. Kühleinrichtung nach einem der vorherigen Ansprüche,
**dadurch gekennzeichnet, dass**
der Sensor zur Steuerung des Kältemittelstroms ausgebildet ist, bei Erfassen von flüssigem Kältemittel am Verdampferausgang und/oder bei einem bestimmten Überhitzungszustand das Expansionsventil (7) zu drosseln.

11. Kühleinrichtung nach einem der vorherigen Ansprüche,
**dadurch gekennzeichnet, dass**
die Kühleinrichtung zur Verwendung von R290, R134a oder 407c als Kältemittel ausgelegt ist.

12. Kühleinrichtung nach einem der vorherigen Ansprüche,
**dadurch gekennzeichnet, dass**
ein weiterer Kältemittelkreislauf (20a) angekoppelt ist, wobei dessen Verflüssiger (3a) luftseitig in Reihe zum Verflüssiger (3) des ersten Kältemittelkreislauf (20) angeordnet ist und deren Verdampfer (8, 8a) kühlmittelseitig in Reihe angeordnet sind.

13. Kühleinrichtung nach einem der Ansprüche 1 - 11,
**dadurch gekennzeichnet, dass**
ein weiterer Kältekreis (20a) parallel angeordnet ist, wobei die Kältekreise einen Verflüssiger 3 aufweisen, der von beiden Kältemittelströmen durchströmt wird.

14. Kühleinrichtung nach einem der vorherigen Ansprüche,
**dadurch gekennzeichnet, dass**
ein innerer Wärmeübertrager (17) vorhanden ist, der zwei Abschnitte des Kältemittelkreises miteinander koppelt.

15. Fahrzeug mit einer Kühleinrichtung nach einem der vorherigen Ansprüche.

16. Schienenfahrzeug mit einer Kühleinrichtung nach einem der Ansprüche 1 - 14.

17. Schienenfahrzeug nach Anspruch 16,
**dadurch gekennzeichnet, dass**
- der Verflüssiger (3) und der Verdichter (2) höher als der Verdampfer (8) und das Expansionsventil (7), wobei insbesondere die höhergelegenen Komponenten auf dem Dach des Schienenfahrzeugs (23) angeordnet sind und die tiefergelegenen Komponenten unter dem Boden des Fahrzeugs (23) angeordnet sind.

18. Schienenfahrzeug nach Anspruch 17,
**dadurch gekennzeichnet, dass** für die Erzeugung des notwendigen Drucks anstelle der Kältemittelpumpe die höhere Lage des Verflüssigers (3) und des Verdichters ausgenutzt wird und die Kältemittelpumpe (6) entfällt.

19. Verfahren zum Kühlen einer Fahrzeugbatterie,
- bei dem ein Kältemittelkreislauf (20) und ein damit gekoppelter Kühlmittelkreislauf (21) verwendet werden, wobei der Kühlmittelkreislauf eine Kühlmittelpumpe (11) umfasst und in Wärmekontakt mit der Fahrzeugbatterie (12) steht,
- bei dem der Kältemittelkreislauf folgende Komponenten aufweist:
- einen Verflüssiger (3),
- eine Kältemittelpumpe (6), die stromabwärts zum Verflüssiger (3) angeordnet ist
- einen Sensor (13, 18, 19) zur Steuerung des Kältemittelstroms
- ein Expansionsventil (7) , das stromabwärts oder parallel zur Kältemittelpumpe angeordnet ist,
- einen Verdampfer (8), der stromabwärts zum Expansionsventil (7) und zur Kältemittelpumpe (6) angeordnet ist,
- einen Verdichter (2), der stromabwärts zum Verdampfer (8) angeordnet ist
- einen Bypass (15) zur Kältemittelpumpe (6),
- einen Bypass (16) zum Verdichter (2),
wobei der Kühlmittelkreislauf und der Kältemittelkreislauf über den Verdampfer (8) als Wärmeübertrager gekoppelt sind,
bei dem bei niedriger Umgebungstemperatur das Kältemittel über den Verdichter-Bypass geführt wird und die Kältemittelpumpe (6) das Kältemittel durch den Kältemittelkreislauf pumpt, wobei der Kältemittelstrom unter Zuhilfenahme des Sensors gesteuert wird,
und bei hoher Umgebungstemperatur der Verdichter (2) in Betrieb ist und das Kältemittel über den Kältemittelpumpen-Bypass geführt wird.

20. Verfahren nach Anspruch 19,
**dadurch gekennzeichnet, dass**
zur Steuerung des Kältemittelstroms ein Sensor (13, 18) am Ausgang des Verdampfers verwendet wird.

21. Verfahren nach einem der vorherigen Ansprüche,
**dadurch gekennzeichnet, dass**
zur Steuerung des Kältemittelstroms ein Füllstandssensor (19) stromaufwärts zur Kältemittelpumpe verwendet wird.

22. Verfahren nach einem der vorherigen Ansprüche,
**dadurch gekennzeichnet, dass**
der Sensor die Kältemittelpumpe (6) steuert.

23. Verfahren nach einem der vorherigen Ansprüche,
**dadurch gekennzeichnet, dass**
die Steuerung derart erfolgt, dass Eingang der Kältemittelpumpe ausreichend Kältemittelflüssigkeit vorliegt.

24. Verfahren nach einem der vorherigen Ansprüche,
**dadurch gekennzeichnet, dass**
die Steuerung derart erfolgt, dass am Ausgang des Verdampfers (8) das Kältemittel im Wesentlichen gasförmig oder bei einem vordefinierten Überhitzungszustand vorliegt.

25. Verfahren nach einem der vorherigen Ansprüche,
**dadurch gekennzeichnet, dass**
als Kältemittel R290, R134a oder 407c verwendet wird.

## Claims

1. Cooling device for a vehicle battery,
- with a coolant circuit (21), which comprises a coolant pump (11) and is in thermal contact with the vehicle battery (12),
- with a refrigerant circuit (20), which has:
- a condenser (3),
- a refrigerant pump (6), which is arranged downstream of the condenser (3),
- a sensor (13, 18, 19) for controlling the flow of refrigerant,
- an expansion valve (7), which is arranged downstream of or parallel to the refrigerant pump (6),
- an evaporator (8), which is arranged downstream of the expansion valve (7) and the refrigerant pump (6),
- a compressor (2), which is arranged downstream of the evaporator (8),
- a bypass (15) to the refrigerant pump (6),
- a bypass (16) to the compressor (2),
wherein the coolant circuit (21) and the refrigerant circuit (20) are coupled via the evaporator (9) as a heat exchanger.

2. Cooling device according to claim 1,
**characterised in that**
the sensor is formed by a fill level sensor (19) for the refrigerant upstream of the refrigerant pump (6).

3. Cooling device according to one of the preceding claims,
**characterised in that**
the sensor is formed by a sensor (18) at the output of the evaporator (8).

4. Cooling device according to claim 3,
**characterised in that**
the sensor is formed by a sensor (13) for controlling the expansion valve (7).

5. Cooling device according to one of the preceding claims,
**characterised in that**
the sensor is embodied to control the refrigerant pump (6) or a valve (13, 14) connected in series with the refrigerant pump.

6. Cooling device according to one of the preceding claims,
**characterised in that**
the bypass (15) to the refrigerant pump (6) and/or the bypass (16) to the compressor (2) is designed as a refrigerant line with a stop valve (5, 10).

7. Cooling device according to one of the preceding claims,
**characterised in that**
the refrigerant pump (6) and/or the compressor (2) has an integrated bypass.

8. Cooling device according to one of the preceding claims,
**characterised in that**
the refrigerant pump (6) has a speed control and/or an active throttling and/or an active feedback.

9. Cooling device according to one of the preceding claims,
**characterised in that**
a collector (4) is arranged between the condenser (3) and the refrigerant pump (6).

10. Cooling device according to one of the preceding claims,
**characterised in that**
the sensor is embodied to control the flow of refrigerant in order to throttle the expansion valve (7) if liquid refrigerant is detected at the evaporator output and/or in the event of a specific overheating state.

11. Cooling device according to one of the preceding claims,
**characterised in that**
the cooling device is designed to use R290, R134a or 407c as a refrigerant.

12. Cooling device according to one of the preceding claims,
**characterised in that**
a further refrigerant circuit (20a) is connected, wherein its condenser (3a) is arranged in series with the condenser (3) of the first refrigerant circuit (20) on the air side and its evaporator (8, 8a) is arranged in series on the coolant side.

13. Cooling device according to one of claims 1 - 11,
**characterised in that**
a further refrigerant loop (20a) is arranged in parallel, wherein the refrigerant loops have a condenser (3) through which both flows of refrigerant pass.

14. Cooling device according to one of the preceding claims,
**characterised in that**
an inner heat exchanger (17) is provided, which couples two sections of the refrigerant circuit to one another.

15. Vehicle with a cooling device according to one of the preceding claims.

16. Rail vehicle with a cooling device according to one of claims 1 - 14.

17. Rail vehicle according to claim 16,
**characterised in that**
- the condenser (3) and the compressor (2) are higher than the evaporator (8) and the expansion valve (7),
wherein in particular the components that are positioned higher are arranged on the roof of the rail vehicle (23) and the components that are positioned lower are arranged below the floor of the vehicle (23).

18. Rail vehicle according to claim 17,
**characterised in that** the higher position of the condenser (3) and the compressor is used to generate the requisite pressure instead of the refrigerant pump and the refrigerant pump (6) is omitted.

19. Method for cooling a vehicle battery,
- in which a refrigerant circuit (20) and a coolant circuit (21) coupled thereto are used, wherein the coolant circuit comprises a coolant pump (11) and is in thermal contact with the vehicle battery (12),
- in which the refrigerant circuit has the following components:
- a condenser (3),
- a refrigerant pump (6) which is arranged downstream of the condenser (3),
- a sensor (13, 18, 19) for controlling the flow of refrigerant,
- an expansion valve (7), which is arranged downstream of or parallel to the refrigerant pump,
- an evaporator (8), which is arranged downstream of the expansion valve (7) and the refrigerant pump (6),
- a compressor (2) which is arranged downstream of the evaporator (8),
- a bypass (15) to the refrigerant pump (6)
- a bypass (16) to the compressor (2),
wherein the coolant circuit and the refrigerant circuit are coupled via the evaporator (8) as a heat exchanger,
in which with a low ambient temperature the refrigerant is guided via the compressor bypass and the refrigerant pump (6) pumps the refrigerant through the refrigerant circuit, wherein the flow of refrigerant is controlled with the aid of the sensor,
and with a high ambient temperature the compressor (2) is in operation and the refrigerant is guided via the refrigerant pump bypass.

20. Method according to claim 19,
**characterised in that**
a sensor (13, 18) is used at the output of the evaporator in order to control the flow of refrigerant.

21. Method according to one of the preceding claims,
**characterised in that**
a fill level sensor (19) upstream of the refrigerant pump is used in order to control the flow of refrigerant.

22. Method according to one of the preceding claims,
**characterised in that**
the sensor controls the refrigerant pump (6).

23. Method according to one of the preceding claims,
**characterised in that**
the control is carried out such that sufficient refrigerant liquid is present at the input of the refrigerant pump.

24. Method according to one of the preceding claims,
**characterised in that**
the control is carried out such that the refrigerant is present at the output of the evaporator (8) in essentially gaseous form or in the event of a predefined overheating state.

25. Method according to one of the preceding claims,
**characterised in that**
R290, R134a or 407c is used as a refrigerant.

## Revendications

1. Dispositif de refroidissement d'une batterie de véhicule,
- comprenant un circuit (21) de fluide de refroidissement, qui comprend une pompe (11) de fluide de refroidissement et qui est en contact thermique avec la batterie (12) de véhicule,
- comprenant un circuit (20) de fluide frigorifique, qui a :
- un condenseur (3),
- une pompe (6) de fluide frigorifique, montée en aval du condenseur (3),
- un capteur (13, 18, 19) de commande du courant de fluide frigorifique,
- une soupape (7) de détente, montée en aval ou en parallèle de la pompe (6) de fluide frigorifique,
- un évaporateur (8), monté en aval de la soupape (7) de détente et de la pompe (6) de fluide frigorifique,
- un compresseur (2), monté en aval de l'évaporateur (8),
- une dérivation (15) pour la pompe (6) de fluide frigorifique,
- une dérivation (16) pour le compresseur (2),
dans lequel le circuit (21) de fluide de refroidissement et le circuit (20) de fluide frigorifique sont accouplés en échangeur de chaleur en passant par l'évaporateur (8).

2. Dispositif de refroidissement suivant la revendication 1,
**caractérisé en ce que**
le capteur est formé par un capteur (19) de niveau du fluide frigorifique en amont de la pompe (6) de fluide frigorifique.

3. Dispositif de refroidissement suivant l'une des revendications précédentes,
**caractérisé en ce que**
le capteur est formé par un capteur (18) à la sortie de l'évaporateur (8).

4. Dispositif de refroidissement suivant la revendication 3,
**caractérisé en ce que**
le capteur est formé par un capteur (13) de commande de la soupape (7) de détente.

5. Dispositif de refroidissement suivant l'une des revendications précédentes,
**caractérisé en ce que**
le capteur est constitué pour commander la pompe (6) de fluide frigorifique ou une soupape (13, 14) montée en série avec la pompe de fluide frigorifique.

6. Dispositif de refroidissement suivant l'une des revendications précédentes,
**caractérisé en ce que**
la dérivation (15) pour la pompe (6) de fluide frigorifique et/ou la dérivation (16) pour le compresseur (2) est réalisée sous la forme d'un conduit pour du fluide frigorifique ayant un robinet (5, 10) d'arrêt.

7. Dispositif de refroidissement suivant l'une des revendications précédentes,
**caractérisé en ce que**
la pompe (6) de fluide frigorifique et/ou le compresseur (2) ont une dérivation intégrée.

8. Dispositif de refroidissement suivant l'une des revendications précédentes,
**caractérisé en ce que**
la pompe (6) de fluide frigorifique a une régulation de vitesse de rotation et/ou un étranglement actif et/ou un retour actif.

9. Dispositif de refroidissement suivant l'une des revendications précédentes,
**caractérisé en ce qu'**
un collecteur (4) est monté entre le condenseur (3) et la pompe (6) de fluide frigorifique.

10. Dispositif de refroidissement suivant l'une des revendications précédentes,
**caractérisé en ce que**
le capteur de commande du courant de fluide frigorifique est constitué pour étrangler la soupape (7) de détente à la détection de fluide frigorifique liquide à la sortie de l'évaporateur et/ou à un état de surchauffe déterminé.

11. Dispositif de refroidissement suivant l'une des revendications précédentes,
**caractérisé en ce que**
le dispositif de refroidissement est conçu pour l'utilisation de R290, R134a ou 407c comme fluide frigorifique.

12. Dispositif de refroidissement suivant l'une des revendications précédentes,
**caractérisé en ce qu'**
il est adjoint un autre circuit (20a) de fluide frigorifique, dans lequel son condenseur (3a) est monté du côté de l'air en série avec le condenseur (3) du premier circuit (20) de fluide frigorifique et son évaporateur (8, 8a) est monté en série du côté du fluide de refroidissement.

13. Dispositif de refroidissement suivant l'une des revendications 1 à 11,
**caractérisé en ce qu'**
un autre circuit (20a) frigorifique est monté en parallèle, dans lequel les circuits frigorifiques ont un condenseur 3, qui est parcouru par les deux courants de fluide frigorifique.

14. Dispositif de refroidissement suivant l'une des revendications précédentes,
**caractérisé en ce qu'**
il y a un échangeur de chaleur (17) intérieur, qui couple entre eux deux tronçons du circuit de fluide frigorifique.

15. Véhicule ayant un dispositif de refroidissement suivant l'une des revendications précédentes.

16. Véhicule ferroviaire ayant un dispositif de refroidissement suivant l'une des revendications 1 à 14.

17. Véhicule ferroviaire suivant la revendication 16,
**caractérisé en ce que**
- le condenseur (3) et le compresseur (2) sont disposés plus haut que l'évaporateur (8) et que la soupape (7) de détente, dans lequel en particulier les composants disposés le plus haut sont mis sur le toit du véhicule (23) ferroviaire et les composants disposés plus bas sont mis sous le fond du véhicule (23).

18. Véhicule ferroviaire suivant la revendication 17,
**caractérisé en ce que**, pour la production de la pression nécessaire, on utilise au lieu de la pompe de fluide frigorifique la position plus haute du condenseur (3) et du compresseur et on se dispense de la pompe (6) de fluide frigorifique.

19. Procédé de refroidissement d'une batterie de véhicule,
- dans lequel on utilise un circuit (20) de fluide frigorifique et un circuit (21) de fluide de refroidissement couplé à celui-ci, dans lequel le circuit de fluide de refroidissement comprend une pompe (11) de fluide de refroidissement, qui est en contact thermique avec la batterie (12) de véhicule,
- dans lequel le circuit de fluide frigorifique a les composants suivants :
- un condenseur (3),
- une pompe (6) de fluide frigorifique, montée en aval du condenseur (3),
- un capteur (13, 18, 19) de commande du courant de fluide frigorifique,
- une soupape (7) de détente, montée en aval ou en parallèle de la pompe de fluide frigorifique,
- un évaporateur (8), monté en aval de la soupape (7) de détente et de la pompe (6) de fluide frigorifique,
- un compresseur (2), monté en aval de l'évaporateur (8)
- une dérivation (15) pour la pompe (6) de fluide frigorifique,
- une dérivation (16) pour le compresseur (2),
dans lequel le circuit de fluide de refroidissement et le circuit de fluide frigorifique sont accouplés en échangeur de chaleur en passant par l'évaporateur (8),
dans lequel, si la température ambiante est basse, on fait passer le fluide frigorifique dans la dérivation de compresseur et la pompe (6) de fluide frigorifique pompe le fluide frigorifique dans le circuit de fluide frigorifique, le courant de fluide frigorifique étant commandé à l'aide du capteur,
et, si la température ambiante est haute, le compresseur (2) est en fonctionnement et on fait passer le fluide frigorifique dans la dérivation de la pompe de fluide frigorifique.

20. Procédé suivant la revendication 19,
**caractérisé en ce que**
pour la commande du courant de fluide frigorifique, on utilise un capteur (13, 18) à la sortie de l'évaporateur.

21. Procédé suivant l'une des revendications précédentes,
**caractérisé en ce que**
pour la commande du courant de fluide frigorifique, on utilise un capteur (19) de niveau en amont de la pompe de fluide frigorifique.

22. Procédé suivant l'une des revendications précédentes,
**caractérisé en ce que**
le capteur commande la pompe (6) de fluide frigorifique.

23. Procédé suivant l'une des revendications précédentes,
**caractérisé en ce que**
la commande s'effectue de manière à ce que suffisamment de liquide de fluide frigorifique soit présent à l'entrée de la pompe de fluide frigorifique.

24. Procédé suivant l'une des revendications précédentes,
**caractérisé en ce que**
la commande s'effectue de manière à ce qu'à la sortie de l'évaporateur (8), le fluide frigorifique soit sensiblement gazeux ou à un état de surchauffe défini à l'avance.

25. Procédé suivant l'une des revendications précédentes,
**caractérisé en ce que** l'
on utilise R290, R134a ou 407c comme fluide frigorifique.
